# EUROPEAN PATENT SPECIFICATION

(11) **EP 3 536 088 B1**
(45) Date of publication and mention of the grant of the patent: **26.02.2025**
(21) Application number: 18738893.9
(22) Date of filing: 10.01.2018
(51) Int. Cl.: H04W 72/0453, H04L 5/00, H04W 72/23

(54) **METHODS, USER EQUIPMENT AND BASE STATION FOR MANAGING A RESOURCE IN A WIRELESS COMMUNICATION SYSTEM**
VERFAHREN, BENUTZERGERÄT UND BASISSTATION ZUM VERWALTEN EINER RESSOURCE IN EINEM DRAHTLOSKOMMUNIKATIONSSYSTEM
PROCÉDÉS, ÉQUIPEMENT UTILISATEUR ET STATION DE BASE POUR LA GESTION D'UNE RESSOURCE DANS UN SYSTÈME DE COMMUNICATION SANS FIL

(30) Priority: 10.01.2017 IN 201741000965; 08.01.2018 IN 201741000965
(43) Date of publication of application: 11.09.2019
(73) Proprietor: Samsung Electronics Co., Ltd., Suwon-si, Gyeonggi-do 16677 (KR)
(72) Inventor: DEOGUN, Pravjyot Singh, Bangalore 560043 (IN); AMURU, Saidhiraj, Bangalore 560037 (IN); NIGAM, Anshuman, Bangalore 560017 (IN)
(74) Representative: Nederlandsch Octrooibureau
(86) International application number: PCT/KR2018/000497
(87) International publication number: WO 2018/131895

(56) References cited:
- EP-A1- 2 595 425
- WO-A1-2016/004634
- HUAWEI ET AL: "Dynamic resource allocation of different numerologies", vol. RAN WG1, no. Spokane, USA; 20170116 - 20170120, 9 January 2017 (2017-01-09), XP051202454, Retrieved from the Internet <URL:http://www.3gpp.org/ftp/tsg_ran/WG1_RL1/TSGR1_AH/NR_AH_1701/Docs/> [retrieved on 20170109]
- HUAWEI HISILICON: "Discussion on resource allocation and indication on NR", vol. RAN WG1, no. Reno, Nevada, USA; 20161114 - 20161118, 13 November 2016 (2016-11-13), XP051175633, Retrieved from the Internet <URL:http://www.3gpp.org/ftp/Meetings_3GPP_SYNC/RAN1/Docs/> [retrieved on 20161113]
- NEC: "Remaining issues on mixed numerology in a single carrier", vol. RAN WG1, no. Reno, USA; 20161114 - 20161118, 4 November 2016 (2016-11-04), XP051189147, Retrieved from the Internet <URL:http://www.3gpp.org/ftp/tsg_ran/WG1_RL1/TSGR1_87/Docs/> [retrieved on 20161104]
- HUAWEI HISILICON: "Resource allocation and indication for data channel", vol. RAN WG1, no. Spokane, USA; 20170403 - 20170407, 25 March 2017 (2017-03-25), XP051251727, Retrieved from the Internet <URL:http://www.3gpp.org/ftp/tsg_ran/WG1_RL1/TSGR1_88b/Docs/> [retrieved on 20170325]
- SAMSUNG: "Wide Bandwidth Operational Aspects", R1-1612436, 3GPP TSG-RAN WG1 MEETING #87, 4 November 2016 (2016-11-04), Reno, US, XP051189323
- LG ELECTRONICS: "Discussion on Wideband Operation", R1-1611781, 3GPP TSG-RAN WG1 MEETING #87, 5 November 2016 (2016-11-05), Reno, US, XP051190147
- NTT DOCOMO; INC: "Consideration on wider BW operation for NR", R1-1612710, 3GPP TSG-RAN WG1 MEETING #87, 4 November 2016 (2016-11-04), Reno, US, XP051189444
- INTEL CORPORATION: "Wide bandwidth support in NR", R1-1611958, 3GPP TSG-RAN WG1 MEETING #87, 6 November 2016 (2016-11-06), Reno, US, XP051190770
- SAMSUNG: "Wider bandwidth operation: CA /DC vs. single carrier", R1-1612435, 3GPP TSG-RAN WG1 MEETING #87, 4 November 2016 (2016-11-04), Reno, US, XP051189322

## Description

### Technical Field

The present disclosure relates to a wireless communication system. More particularly, the present disclosure relates to a method, a user equipment (UE) and a base station for managing a resource in a wireless communication system.

### Background Art

To meet the demand for wireless data traffic having increased since deployment of 4th-generation (4G) communication systems, efforts have been made to develop an improved 5th-generation (5G) or pre-5G communication system. Therefore, the 5G or pre-5G communication system is also called a 'beyond 4G network' or a 'post long term evolution (LTE) system'.

The 5G communication system is considered to be implemented in higher frequency millimeter wave (mmWave) bands, e.g., 60GHz bands, so as to accomplish higher data rates. To decrease propagation loss of the radio waves and increase the transmission distance, the beamforming, massive multiple-input multiple-output (MIMO), full dimensional MIMO (FD-MIMO), array antenna, an analog beam forming, large scale antenna techniques are discussed in 5G communication systems.

In addition, in 5G communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancellation and the like.

In the 5G system, hybrid frequency-shift keying (FSK) and quadrature amplitude modulation (QAM) (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

The 3rd generation partnership project (3GPP) 5^{th} generation telecommunication is expected to support wide range of services including enhanced mobile broadband, ultra-reliable and low latency communication, massive machine type communications, and the like. Each service has its own specific set of requirements, which is expected to be catered by a cellular network. For instance, the enhanced mobile broadband requires high speed of data transfer, the ultra-reliable low latency communication requires data transfer with very low latency but may not require high data rate, while the massive machine type communications may have the requirement to minimize power consumption of a user equipment (UE). In order to cater for different requirements, the cellular network can partition radio resources such that each set of radio resources can meet the requirements of a given service by using different physical layer configurations. This is also called RAN slicing.

In a 5G system, it would be possible for the UE to access multiple services concurrently, hence RAN procedures are required to be designed such that different physical layer configurations can be operated efficiently by the UE without hampering any of the service requirements. It is expected that single medium access control (MAC) entity could possible support multiple physical layer configurations or numerologies simultaneously. Hence, many MAC procedures (e.g., buffer status report, multiplexing, scheduling request) are expected to be common for different physical numerologies.

The above information is presented as background information only to assist with an understanding of the present disclosure. No determination has been made, and no assertion is made, as to whether any of the above might be applicable as prior art with regard to the present disclosure.

Huawei et al, "Dynamic resource allocation of different numerologies" (3GPP Draft, R1-1700028, 9 January 2017) discusses the method of numerology determination of different numerologies in a NR carrier to support flexible system deployment from the transmitter perspective and to support energy efficient numerology identification from the receiver perspective.

Huawei, HiSilicon ("Discussion on resource allocation and indication on NR", 3GPP Draft, R1-1611661, 13 November 2016) discusses the RB grid for FDM and resource allocation schemes.

NEC ("Remaining issues on mixed numerology in a single carrier", 3GPP Draft, R1-1611715, 4 November 2016) discusses the numerology indication and resource allocation in a mixed numerology carrier.

WO 2016/004634 A1 discusses methods of UE and eNB for transmitting a waveform for wireless communication networks. A method for UE to transmit to an eNB an uplink channel carrying data or control information bits, comprising: receiving an OFDM-based down link channel occupying a set of downlink resource elements, where each downlink resource element has a downlink subcarrier spacing in the frequency domain and a downlink symbol duration in the time domain; generating a SC-FDMA based uplink channel from the information bits, where the uplink channel occupies a set of uplink resource elements and each uplink resource element has a uplink subcarrier spacing in the frequency domain differing from the downlink subcarrier spacing, and a uplink symbol duration in the time domain differing from the downlink symbol duration; and transmitting the SC-FDMA based uplink channel.

EP2595425 A1 discloses an apparatus for receiving signals in a cellular communication system with multiple subcarriers, the apparatus being a terminal and comprising: a cell-bandwidth operation unit for operating on a cell bandwidth with a first number of subcarriers for receiving system information transmitted by a base station including information about the cell bandwidth; and a power-saving-bandwidth unit for operating on a power-saving bandwidth with a second number of subcarriers smaller than the first number of subcarriers for receiving a physical control channel or a physical channel conveying uplink or downlink resource assignments.

### [Disclosure]

### [Technical Problem]

In order to support multiple physical layer configurations, it is expected that the cellular network may need to support bandwidth on the order of 1GHz in a single carrier manner. In other words, without using carrier aggregation, a user of the 5G must support bandwidths of this order. Several challenges arise in this regard as the user of the UE must support wide bandwidth, such as radio frequency (RF), power consumption, scheduling, and the like. Since the user of the UE need not always support such wide bandwidth, the concept of 1^{st} and 2^{nd} RF bandwidth were introduced. However, the goal is to avoid the user of the UE from monitoring wide bandwidth all the time as it is not power efficient. But however, there should be ability to configure the user of the UE for such wide bands to support very high data rate requirements. Furthermore, the wide bandwidth is available in above 6GHz bands and hence can be used effectively.

Thus, it is desired to address the above mentioned disadvantages or other shortcomings or at least provide a useful alternative.

### [Technical Solution]

The invention is defined by the subject-matter of the appended independent claims. Advantageous embodiments are subject of the appended dependent claims.

Aspects of the present disclosure are to address at least the above-mentioned problems and/or disadvantages and to provide at least the advantages described below. Accordingly, an aspect of the present disclosure is to provide a method, a user equipment (UE) and a base station for managing a resource in a wireless communication system.

Another aspect of the present disclosure is to allocate, by the base station, the resource for a data transmission for the UE in a two-step frequency-domain assignment process as a) indicating at least one bandwidth part, and b) indicating at least one resource block (RB) within the at least one bandwidth part.

Another aspect of the present disclosure is to determine a number of RBs in each of the bandwidth parts based on a numerology and size associated with corresponding bandwidth part.

Another aspect of the present disclosure is to allocate, by the base station, the resource for the data transmission from the UE by indicating an active time period of the at least one RB within the bandwidth part.

Another aspect of the present disclosure is to provide the active time period that indicates an activation and deactivation of the at least one RB within the bandwidth part for the data transmission from the UE.

Another aspect of the present disclosure is to indicate the active time period by the base station using at least one of an explicit downlink control information (DCI) signaling, an implicit DCI signaling, a medium access control control-element (MAC CE) signaling, a time pattern, and a discontinuous reception (DRX) signaling.

Another aspect of the present disclosure is to configure, by the base station, the bandwidth part including a search space indicating a location of at least one RB for the control and data transmission from the UE.

Another aspect of the present disclosure is to receive, by the base station, capability information to support at least one physical layer configuration from the UE.

Another aspect of the present disclosure is to configure, by the base station, the at least one physical layer configuration for the at least one scheduling request for the UE.

Another aspect of the present disclosure is to manage the at least one scheduling request for the resource in the wireless communication system.

Another aspect of the present disclosure is to activate a scheduling request configuration by the base station based on at least one of a radio resource control (RRC) message, a MAC message and a DCI message.

Another aspect of the present disclosure is to activate the scheduling request configuration based a timer value.

Another aspect of the present disclosure is to initiate a scheduling request trigger by the buffer status reporting mechanism based on the mapping between logical channels for which buffer is not empty and the scheduling request configuration.

Another aspect of the present disclosure is to initiate a scheduling request trigger based on a priority indicated in the scheduling request configuration.

Another aspect of the present disclosure is to manage a prohibit timer for each scheduling request configuration by restarting the prohibit timer on a scheduling request transmission and not transmitting any further scheduling requests while prohibit timer is running for the given scheduling request configuration.

Another aspect of the present disclosure is to manage a counter for each scheduling request configuration by incrementing the counter on the scheduling request transmission, releasing scheduling request resources, and initiating random access procedure when counter exceeds a pre-defined threshold value.

Another aspect of the present disclosure is to initiate random access procedure when the scheduling request is triggered for the scheduling request configuration and no valid radio resource is available for the given scheduling request configuration.

Another aspect of the present disclosure is to map the logical channel to the scheduling request configuration by indicating a scheduling request configuration index within a logical channel configuration.

Another aspect of the present disclosure is to indicate the capability information by at least one of number of transmission and reception chains supported by the UE and a number of different transmission time values (TTI) supported by the UE.

Another aspect of the present disclosure is to provide a mechanism for scheduling request framework for the scenario where UE operates multiple physical layer configurations concurrently.

In accordance with an aspect of the present disclosure, a method for managing a resource in a wireless communication system is provided. The method includes allocating, by a base station, the resource for a data transmission from a UE in a two-step frequency-domain assignment process as a) indicating at least one bandwidth part, and b) indicating at least one RB within the at least one bandwidth part.

In an embodiment of the present disclosure, the UE is first indicated the bandwidth part and then the at least one RB inside the bandwidth part is informed to the UE based on dedicated signaling.

In an embodiment of the present disclosure, the UE is not capable of supporting a carrier bandwidth.

In an embodiment of the present disclosure, the resource is allocated in one of semi-static manner and dynamic manner, wherein the resource is allocated in the semi-static manner via a RRC signaling or a timer-based signaling, and the resource is allocated in the dynamic manner via a DCI and a MAC-CE signaling.

In an embodiment of the present disclosure, a number of RBs in each of the bandwidth parts is determined based on a numerology and size associated with corresponding bandwidth part.

In accordance with another aspect of the present disclosure, a method for managing a resource in a wireless communication system is provided. The method includes allocating, by a base station, the resource for a data transmission from a UE by indicating an active time period of at least one RB within a bandwidth part.

In an embodiment of the present disclosure, the active time period indicates an activation and deactivation of the at least one RB within the bandwidth part within the UE's bandwidth for the data transmission from the UE.

In an embodiment of the present disclosure, the active time period is indicated by the base station using at least one of an explicit DCI signaling, an implicit DCI signaling, a MAC CE signaling, a time pattern and a DRX signaling.

In an embodiment of the present disclosure, the bandwidth part controls the at least one RB for the UE by activating and de-activing the at least one RB in the bandwidth part.

In accordance with another aspect of the present disclosure, a method for managing a resource in a wireless communication system is provided. The method includes configuring, by a base station, a bandwidth part including a search space indicating a location of at least one RB for the data transmission from a UE. Further, the method includes signaling the bandwidth part to the UE.

In accordance with another aspect of the present disclosure, a method for managing at least one scheduling request for a resource in a wireless communication system. The method includes receiving, by a base station, capability information to support at least one physical layer configuration from a UE. Further, the method includes configuring, by the base station, the at least one physical layer configuration for the at least one scheduling request for the UE. Further, the method includes managing the at least one scheduling request for the resource in the wireless communication system.

In an embodiment of the present disclosure, the at least one of the radio resource for the scheduling request and a parameter related to a transmission for the scheduling request is configured by the base station in the form of RRC configuration. The RRC configuration includes the at least one scheduling request configuration for the UE.

In an embodiment of the present disclosure, the parameter includes at least one of a physical carrier identity, a physical cell index, a physical layer configuration, a TTI value, a slot length, a mini-slot length, a hybrid automatic repeat request (HARQ) process, a HARQ entity, a buffer status report (BSR) entity, a configuration identity of the scheduling request, a logical channel identity, and a logical channel group identity.

In an embodiment of the present disclosure, each scheduling request configuration includes at least a value of sr-ConfigIndex for uniquely identifying a scheduling request configuration, a value of sr-ProhibitTimer, a value of sr-TransMax, and a value of sr-DeactivationTimer.

In an embodiment of the present disclosure, the scheduling request configuration is activated and deactivated by the base station based on at least one of a RRC message, a MAC message and a DCI message.

In an embodiment of the present disclosure, the scheduling request configuration is activated and deactivated based on a timer value given by a sr-DeactivationTimer. The method includes starting a timer, by the UE, for the scheduling request configuration when the given scheduling request configuration is activated. Further, the method includes deactivating the scheduling request configuration, by the UE, when the timer expires for the given scheduling request configuration.

In an embodiment of the present disclosure, the least one of logical channel is mapped to the scheduling request configuration by indicating the scheduling request configuration index, given by sr-ConfigIndex, within a logical channel configuration.

In an embodiment of the present disclosure, the buffer status reporting mechanism selects and triggers a scheduling request based on the mapping between logical channels for which buffer is not empty and the scheduling request configuration.

In an embodiment of the present disclosure, the buffer status reporting mechanism selects and triggers a scheduling request trigger based on a priority indicated in a scheduling request configuration.

In an embodiment of the present disclosure, the UE maintains an independent sr-ProhibitTimer for each scheduling request configuration and transmits the scheduling request according to the scheduling request configuration if the sr-ProhibitTimer is not running for the given scheduling request configuration. Further, the UE manages sr-ProhibitTimer for the scheduling request configuration and starts the sr-ProhibitTimer of the scheduling request configuration when the UE initiates transmission of the scheduling request for the given scheduling request configuration.

In an embodiment of the present disclosure, the UE maintains an independent variable SR_COUNTER for each scheduling request configuration and the UE manages SR_COUNTER for the scheduling request configuration by at least one of a) setting the SR_COUNTER value of the scheduling request configuration to zero if the scheduling request is triggered and there are no other pending scheduling requests for the given scheduling request configuration, b) incrementing the value of SR_COUNTER of the scheduling request configuration by one for each scheduling request transmission of the given scheduling request configuration, and c) releasing at least one PUCCH resource for one or more serving cell and initiating a random access procedure, if value of SR_COUNTER of the scheduling request configuration exceeds the sr-TransMax value of the given scheduling request configuration.

In an embodiment of the present disclosure, the UE initiates the random access procedure if the scheduling request is triggered for the given scheduling request configuration and a MAC entity has no valid physical uplink control channel (PUCCH) resource for the given scheduling request configuration.

In an embodiment of the present disclosure, the capability information is indicated by at least one of number of transmission and reception chains supported by the UE and a number of different transmission time values (TTI) supported by the UE.

In accordance with another aspect of the present disclosure, a method for managing a resource in a wireless communication system is provided. The method includes configuring, by a UE, a resource for a data transmission in a two-step frequency-domain assignment process as a) configuring at least one bandwidth part indicated by a base station, and b) configuring at least one RB within the at least one bandwidth part, for the use by the UE, indicated by the base station. Further, the method includes performing, by the UE, the data transmission using the at least one RB within the at least one bandwidth part.

In accordance with another aspect of the present disclosure, a method for managing a resource in a wireless communication system is provided. The method includes receiving, by a UE, an active time period of at least one RB within a bandwidth part and an active time period for the bandwidth part for a data transmission from a base station. Further, the method includes configuring, by the UE, the resource for the data transmission based on the active time period of the at least one RB within the bandwidth part and the active time period for the bandwidth part. Further, the method includes performing, by the UE, the data transmission using the at least one RB within the at least one bandwidth part.

In accordance with another aspect of the present disclosure, a method for managing a resource in a wireless communication system is provided. The method includes receiving, by a UE, a bandwidth part allocated by a base station. The bandwidth part comprising a search space indicating a location of at least one RB for a data transmission. Further, the method includes identifying, by the UE, the at least one RB within the search space. Further, the method includes performing, by the UE, the data transmission using the at least one RB within the at least one bandwidth part.

In accordance with another aspect of the present disclosure, a method for managing at least one scheduling request for a resource in a wireless communication system is provided. The method includes sending, by a UE, capability information to support at least one physical layer configuration to a base station. Further, the method includes receiving, by the UE, a configuration of the at least one physical layer configuration for the at least one scheduling request from the base station. Further, the method includes managing the at least one scheduling request for the resource in the wireless communication system.

In accordance with another aspect of the present disclosure, a base station for managing a resource in a wireless communication system is provided. The base station includes a resource controller coupled to a memory and a processor. The resource controller is configured to allocate the resource for a data transmission for a UE in a two-step frequency-domain assignment process as a) indicating at least one bandwidth part, and b) indicating at least one RB within the at least one bandwidth part.

In accordance with another aspect of the present disclosure, a base station for managing a resource in a wireless communication system is provided. The base station includes a resource controller coupled to a memory and a processor. The resource controller is configured to allocate the resource for a data transmission from a UE by indicating an active time period of at least one RB within a bandwidth part.

In accordance with another aspect of the present disclosure, a base station for managing a resource in a wireless communication system is provided. The base station includes a resource controller coupled to a memory and a processor. The resource controller configures a bandwidth part including a search space indicating a location of at least one RB for the data transmission from a UE and signal the bandwidth part to the UE.

In accordance with another aspect of the present disclosure, a base station for managing at least one scheduling request for a resource in a wireless communication system is provided. The base station includes a resource controller coupled to a memory and a processor. The resource controller is configured to receive capability information to support at least one physical layer configuration from a UE. Further, the resource controller configures the at least one physical layer configuration for the at least one scheduling request for the UE. Further, the resource controller is configured to manage the at least one scheduling request for the resource in the wireless communication system.

In accordance with another aspect of the present disclosure, a UE for managing a resource in a wireless communication system is provided. The UE includes a resource controller coupled to a memory and a processor. The resource controller configures a resource for a data transmission in a two-step frequency-domain assignment process as a) configuring at least one bandwidth part indicated by a base station, and b) configuring at least one RB within the at least one bandwidth part indicated by the base station. The resource controller performs the data transmission using the at least one RB within the at least one bandwidth part.

In accordance with another aspect of the present disclosure, a UE for managing a resource in a wireless communication system is provided. The UE includes a resource controller coupled to a memory and a processor. The resource controller receives an active time period of at least one RB within a bandwidth part and an active time period of the bandwidth part for a data transmission from a base station. Further, the resource controller configures the resource for the data transmission based on the active time period of the at least one RB within the bandwidth part and the active time period of the bandwidth part. Further, the resource controller performs the data transmission using the at least one RB within the at least one bandwidth part.

In accordance with another aspect of the present disclosure, a UE for managing a resource in a wireless communication system is provided. The UE includes a resource controller coupled to a memory and a processor. The resource controller is configured to receive a bandwidth part allocated by a base station. The bandwidth part includes a search space indicating a location of at least one RB for a data transmission. Further, the resource controller is configured to identify the at least one RB within the search space. Further, the resource controller is configured to perform the data transmission using the at least one RB within the at least one bandwidth part.

In accordance with another aspect of the present disclosure, a UE for managing a resource in a wireless communication system is provided. The UE includes a resource controller coupled to a memory and a processor. The resource controller is configured to send capability information to support at least one physical layer configuration to a base station. Further, the resource controller is configured to receive a configuration of the at least one physical layer configuration for the at least one scheduling request from the base station. The resource controller is configured to manage the at least one scheduling request for the resource in the wireless communication system.

Other aspects, advantages, and salient features of the disclosure will become apparent to those skilled in the art from the following detailed description, which, taken in conjunction with the annexed drawings, discloses various embodiments of the present disclosure.

### Brief Description of Drawings

This above and other aspects, features, and advantages of certain embodiments of the present disclosure will be more apparent from the following description taken in conjunction with the accompanying drawings, in which:
FIG. 1 illustrates an architecture for managing a resource in a wireless communication system according to an embodiment of the present disclosure;
FIG. 2 illustrates a narrow bandwidth (BW) and a wide BW being configured for a user equipment (UE) in a wireless communication system according to an embodiment of the present disclosure;
FIG. 3 illustrates a resource being managed in a wireless communication system based on a two-step frequency-domain assignment process according to an embodiment of the present disclosure;
FIG. 4 illustrates a resource being managed in a wireless communication system based on a common search space procedure according to an embodiment of the present disclosure;
FIG. 5 illustrates multiple scheduling request resources being managed based on a timer according to an embodiment of the present disclosure;
FIG. 6 illustrates multiple scheduling request resources being managed based on a priority according to an embodiment of the present disclosure;
FIG. 7 is a block diagram illustrating a base station according to an embodiment of the present disclosure;
FIG. 8 is a block diagram illustrating a UE according to an embodiment of the present disclosure;
FIG. 9 is a flow diagram illustrating various operations, implemented on a base station, for managing a resource in a wireless communication system based on a common search space procedure according to an embodiment of the present disclosure;
FIG. 10 is a flow diagram illustrating various operations, implemented on a base station, for managing one or more scheduling request for a resource in a wireless communication system according to an embodiment of the present disclosure;
FIG. 11 is a flow diagram illustrating various operations, implemented on a UE, for managing a resource in a wireless communication system based on the timer according to an embodiment of the present disclosure;
FIG. 12 is a flow diagram illustrating various operations, implemented on a UE, for managing a resource in a wireless communication system based on a common search space procedure according to an embodiment of the present disclosure; and
FIG. 13 is a flow diagram illustrating various operations, implemented on a UE, for managing one or more scheduling request for a resource in a wireless communication system according to an embodiment of the present disclosure.

Throughout the drawings, like reference numerals will be understood to refer to like parts, components, and structures.

### [Mode for Invention]

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein can be made. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

As is traditional in the field, embodiments may be described and illustrated in terms of blocks which carry out a described function or functions. These blocks, which may be referred to herein as units or modules or the like, are physically implemented by analog or digital circuits, such as logic gates, integrated circuits, microprocessors, microcontrollers, memory circuits, passive electronic components, active electronic components, optical components, hardwired circuits, or the like, and may optionally be driven by firmware and software. The circuits may, for example, be embodied in one or more semiconductor chips, or on substrate supports, such as printed circuit boards, and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the present disclosure. Likewise, the blocks of the embodiments may be physically combined into more complex blocks without departing from the scope of the present disclosure.

The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings. Although the terms first, second, and the like, may be used herein to describe various elements, these elements should not be limited by these terms. These terms are generally only used to distinguish one element from another.

Accordingly embodiments herein disclose a base station for managing a resource in a wireless communication system. The base station includes a resource controller coupled to a memory and a processor. The resource controller is configured to allocate the resource for a data transmission for a user equipment (UE) in a two-step frequency-domain assignment process as a) indicating at least one bandwidth part, and b) indicating at least one resource block (RB) within the at least one bandwidth part.

Unlike methods and systems of the related art, the proposed method can be used to avoid wastage of the radio resources by optimal resource allocation according to the related art. The proposed method supports a high data rate and enables power savings via dynamic configurations of the resource allocation. The method can be used to schedule uplink transmissions based on service and physical layer numerology requirements. The method can be used to activate and deactivate and provide a configuration sharing between multiple scheduling request resources in an effective manner. The method can be used to prevent a numerology blockage issue which hinders scheduling of urgent services.

The proposed method can be used to schedule the scheduling request (SR) resources in a simple manner and effective manner, so as to reduce the resource wastage in the wireless communication system. The proposed method can be used to provide different scheduling requirements for different services in the wireless communication system.

The method can be used to schedule uplink transmissions based on service and physical layer numerology requirements. The method provides various procedures for activation/ deactivation and configuration sharing between multiple scheduling request resources. The method can be used to provide the procedure to prioritize and select scheduling request use case for the case of multiple scheduling request resources.

In the proposed method, a single medium access control (MAC) entity in the UE is used to operate multiple physical layer configurations or bandwidth parts simultaneously. The UE may request for the uplink grants corresponding to different physical layer configurations or bandwidth parts to initiate the data transfer. The proposed method allows the downlink data without performing connection establishment with the cellular network, thereby reducing the data reception latency.

The following terminology is used in the patent document.

Bandwidth (BW) region: Size and location of a bandwidth under consideration.

Initial Access BW: In the BW region, where the UE performs initial measurements and radio access (RA) procedure-related reception. Further, in the initial access BW, primary synchronization signal (PSS), secondary synchronization signal (SSS) and other reference signals (if any) will be transmitted. In the initial access BW, the BW size is not more than 5 or 20MHz for < 6GHz systems and not more than 40 or 80MHz for > 6GHz systems.

Minimum Radio resource management (RRM) BW: The RRM BW region needed by the UE in the RRC IDLE mode.

RRM BW: This is the BW region and in an RRC_CONNECTED mode, the UE monitors for performing RRM measurements (for e.g., handover purposes).

1^{st} RF and 2^{nd} RF BW: These are UE specific BW regions that can be configured after initial access for the UE in the connected mode. While the 1^{st} RF BW is for new radio-physical downlink control channel (NR-PDCCH) transmission, the 2^{nd} RF BW can be used for both NR-PDCCH (if deemed necessary beyond the contents of the 1^{st} RF BW) and PDSCH transmissions. Other usage cases, such as for a channel state information reference symbol (CSI-RS), are not precluded. The 1^{st} RF BW is typically a narrow bandwidth part while the 2^{nd} RF BW is a wider bandwidth part. This is to help for power savings for the UE. The UE may be instructed to switch to and from the 1^{st} RF BW and the 2^{nd} RF BW for power saving when the data usage is not very high.

BW's monitored by a RRC IDLE UE: Initial access and minimum RRM BW.

BW's monitored by a RRC CONNECTED UE: RRM BW, 1^{st} and 2^{nd} RF BW.

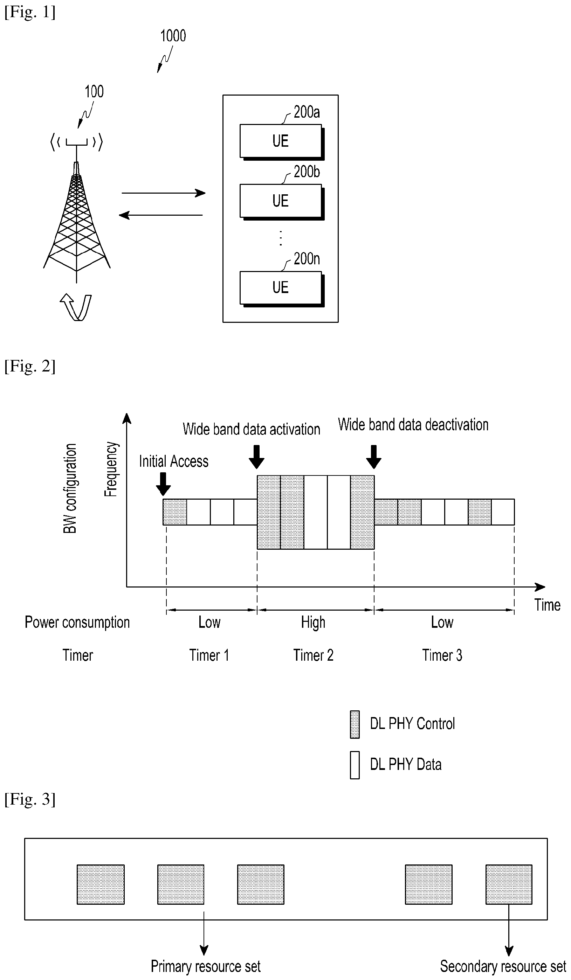

Referring now to the drawing, and more particularly to FIGS. 1 to 13, there are shown preferred embodiments.

FIG. 1 illustrates an architecture for managing a resource in a wireless communication system according to an embodiment of the present disclosure.

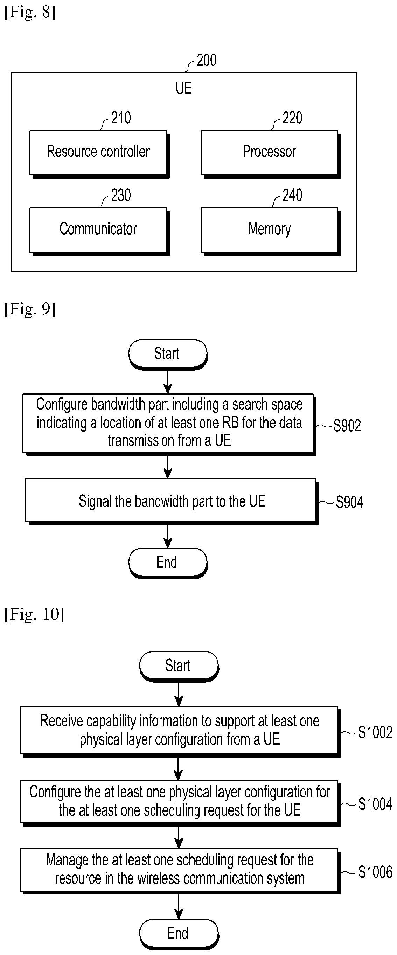

Referring to FIG. 9, a wireless communication system 1000 includes a base station 100 and a set of UEs 200a-200n (Hereafter label of the UE is 200). The UE 200 can be, for example but not limited to, a cellular phone, a tablet, a smart phone, a laptop, a personal digital assistant (PDA), a global positioning system (GPS), a multimedia device, a video device, a game console, or the like.

The UE 200 may also be referred to by those skilled in the art as a mobile station, a subscriber station, a mobile unit, a subscriber unit, a wireless unit, a remote unit, a mobile device, a wireless device, a wireless communications device, a mobile subscriber station, an access terminal, a mobile terminal, a wireless terminal, a remote terminal, a handset, a user agent, a mobile client, or the like. The UE 200 is compliant with multiple, different communication protocols that can operate as a multi-mode device by communicating within a 5G network.

The base station 100 may also be referred to as a base transceiver station, a radio base station, a radio transceiver, a transceiver function, a basic service set (BSS), an extended service set (ESS), an evolved node B (eNB), or the like.

In an embodiment of the present disclosure, the base station 100 is configured to allocate the resource (i.e., bandwidth) for the data transmission for the UE 200 in a two-step frequency-domain assignment process as a) indicating at least one bandwidth part (i.e., primary resource set), and b) indicating at least one RB (i.e., secondary resource set) within the at least one bandwidth part. The number of RBs in each of the bandwidth parts is determined based on a numerology associated with corresponding bandwidth part.

In an embodiment of the present disclosure, the bandwidth part controls the at least one RB for the UE 200 in an on-off manner. The UE 200 is not capable of supporting a carrier bandwidth. In an embodiment of the present disclosure, the UE 200 is first indicated the bandwidth part and then the at least one RB inside the bandwidth part is informed to the UE 200 based on a dedicated signaling.

In an embodiment of the present disclosure, the base station 100 is configured to allocate the resource for the data transmission from the UE 200 by indicating the active time period of at least one RB within the bandwidth part. In an embodiment of the present disclosure, the active time period indicates the activation and deactivation of the at least one RB within the bandwidth part for the data transmission from the UE 200.

In an embodiment of the present disclosure, the active time period is indicated by the base station 100 using at least one of an explicit downlink control information (DCI) signaling, an implicit DCI signaling, a medium access control control-element (MAC CE) signaling, a time pattern and a discontinuous reception (DRX) signaling.

In an embodiment of the present disclosure, the bandwidth part controls the at least one RB for the UE 200 by activating and de-activing the at least one RB in the bandwidth part.

In an embodiment of the present disclosure, the base station 100 configures the bandwidth part including a search space indicating the location of at least one RB for the data transmission from the UE 200 and signals the bandwidth part to the UE 200.

In an embodiment of the present disclosure, the base station 100 is configured to monitor a UE common information (for RRC connected UE's) in a common search space (CSS). Further, the base station 100 is configured to monitor a common per-beam information in above 6GHz systems in a UE search space (USS). Further, the base station 100 is configured to monitor the dedicated search spaces for UE specific configurations and obtains configurations for the 2^{nd} RF BW (if needed). The location of search spaces for the UE 200 depends on the UE's 1^{st} RF bandwidth, 2^{nd} RF bandwidth and a system bandwidth.

In an embodiment of the present disclosure, the configuration of the DL bandwidth part includes at least one CORESET. The CORESET contains the search space for the DCI. The maximum bandwidth for the CORESET for a remaining minimum system information (RMSI) scheduling and new radio-physical downlink shared channel (NR-PDSCH) carrying the RMSI should be equal to or smaller than a certain download (DL) bandwidth of NR that all UE 200 can support in each frequency range, so that the UE 200 is only assumed to receive/transmit within the active DL/upload (UL) bandwidth part(s) using the associated numerology.

In an embodiment of the present disclosure, the base station 100 is configured to manage the at least one scheduling request for the resource by receiving capability information to support at least one physical layer configuration from the UE 200, and configuring the at least one physical layer configuration for the at least one scheduling request for the UE 200. Various aspects to be considered for managing the resource in the wireless communication system 1000 is subsequently discussed in the patent disclosure.

FIG. 2 illustrates a narrow bandwidth (BW) and a wide BW being configured for a UE in a wireless communication system according to an embodiment of the present disclosure.

Referring to FIG. 2. Wide Bandwidth Support Bandwidths: While 5G considers communications, it is not necessary for the UE 200 to always monitor a wide BW, and the 1 GHz single carrier operation can be accompanied by the 1^{st} RF and 2^{nd} RF BW operations/configurations to realize the UE power savings (a main KPI for 5G). Aspects to be considered when configuring the 1^{st} RF BW and 2^{nd} RF BW to the UE 200 are subsequently discussed.

Initial Access and minimum RRM BW: In the initial access BW region, PSS/SSS and other reference signals (if any) are present. For above 6 GHz, a RS may include beam specific mobility RS that can be used for identifying a best beam during an initial access stage. The BWs associated with a random access may be configurable by an explicit signaling and/or may depend on a locations or size of a random access response which is considered to be a part of the initial access BW. Further, the BW required for monitoring paging messages is considered to be part of the initial access BW. In fact, all the UE procedures, before dedicated resources are configured, need to be supported in the initial access BW. This may include a NR-PDCCH and possibly a NR-PDSCH decoding for a random access response, connection establishment, system information delivery and paging. Otherwise, the UE 200 will have to retune its RF frequently and the associated signaling overhead is not negligible either. However, additional NR-PDSCH resources outside of the initial access BW may be considered for enhancing a system capacity. For instance, the NR-PDCCH in the initial access BW indicates the NR-PDSCH resources outside the initial access BW. The RF re-tune time should be taken into account when choosing the NR-PDSCH resource in this case.

Further, a paging (which is considered to be part of the initial access procedures) BW need not be same as the initial access BW as it depends on the NR-PDSCH locations obtained in the NR-PDCCH decoded as part of the paging message. Does NR require separate BW regions for the NR-PDCCH and the NR-PDSCH for the paging procedure (similar to 1^{st} and 2^{nd} RF BWs defined for the connected mode [1]) NR-PDCCH decoding is frequent as the UE 200 needs to monitor it every DRx cycle. In order to avoid high power consumption, the NR-PDCCHBW is preferably small in size (definitely not orders of magnitude higher than the LTE case). Does NR-PDSCH BW need to be wide Having a wide bandwidth allows to support a large number of users, so as to increase a paging capacity to support a massive number of users. But if the UE 200 monitors such a wide band, the power consumption massively rises due to the hardware complexities (high sampling rate, filters, and the like). The issue is also relevant for the case when the UEs 200 are required to monitor the PDSCH message that does not contain it's (a UE's) own identity. Considering these aspects RAN should consider whether there is any requirement for the PDSCH BW to be different from and larger than the NR-PDCCH BW for paging purposes.

The minimum RRM BW is used for a reference signal receive power (RSRP) and reference signal received quality (RSRQ) measurements by the UE 200 in the RRC IDLE mode. Further, a common RS is preferred for the idle mode and the connected mode to enable RSRP/RSRQ measurements. Furthermore, the SSS and the mobile relay station-1 (MRS-1) are preferred as the RS for <6 GHz and >6 GHz respectively for RRM purposes. Hence, the minimum RRM BW size is equal to the initial access BW size. In addition, in the idle mode, the UE 200 only monitors the BW regions. Overall, the UE 200 must at least monitor and supports a UE-minimum bandwidth equal to the initial access bandwidth.

RRM BW: The RRM BW is used by the UE 200, in the RRC connected mode, for performing the RRM measurements (for e.g., handover purposes). The RRM BW can be a) same as the initial access BW or b) larger than the initial access BW. Further, the SSS and the BRS are potential the RS to be used for these purposes. When the SSS is used, the RRM BW is same as the initial access BW. For case (b), the BRS bandwidth may be configured to be the full BW so that measurement accuracy needs to be higher. In addition, the BRS can also be used for connected mode RRM measurement within the UE-specific RRM BW. Hence, the RRM BW size is greater than or equal to the initial access BW size.

It is generally desirable to avoid having the UE 200 to re-tune in order to perform inter-cell measurements. This will also require some network coordination where the base station 100 indicates to the UEs 200 the RRM BW for adjacent cells. It is therefore beneficial if the RRM measurements are performed over the BW that should preferably be common among cells. It is also clear that for the RRM measurements, wide bandwidth measurements are always more accurate. Hence, the bandwidth of the RRM signals must also be a design choice. On the other hand, the narrow RRM BW measurements can be fast, the power savings of the UE 200 is enabled, but also not very accurate. These tradeoff's must be considered in detail. Below shown in Table 1 is the LTE measurement configuration. Similar concepts are needed for the 5G system and future wireless systems also. Of course the sizes for 5G will change/scale based on the bandwidth under consideration.

**[Table 1]**

| **Configuration** | **Physical Layer Measurement period: T_{Measurement_Period _Inter_FDD}[ms]** | **Measurement bandwidth [RB]** |
|---|---|---|
| 0 | 480 x N_{freq} | 6 |
| 1 | 240 x N_{freq} | 50 |

1^{st} RF BW: As mentioned earlier, the 1^{st} RF BW is configured only for the UE 200 in the connected mode. One issue is whether or not the 1^{st} RF BW can be smaller than the initial access BW. Depending on the use cases for the 1^{st} RF BW, its BW values can be defined.

The following are some of the purposes identified for the 1^{st} RF BW:
a) Monitor the UE common information (for RRC Connected UE's),
b) Monitor the common per-beam information in above 6 GHz systems,
c) Monitor dedicated search spaces for UE specific configurations and to get configurations for the 2^{nd} RF BW (if needed), and
d) Support RRM measurements (if the RRM BW is inside the 1^{st} RF BW).

Therefore,
1) Some part of the 1^{st} RF BW can be UE specific, and
2) The 1^{st} RF BW can overlap with the RRM BW region.

Flexible Configurations for several UE's 200: The 1^{st} RF BW should allow multiplexing of the NR-PDCCH transmissions for the relatively large number of UEs 200. Therefore, the 1^{st} RF BW's of UEs 200 should overlap (i.e., have common parts for different UEs) in order for UEs 200 to monitor UE-common information (over a common search space) while also allowing some UE specific configurations. Specifically, if the location of the 1^{st} RF BW is common for all UEs 200, there is no flexibility for further UE-specific configurations. When locations for the 1^{st} RF BW are not identical among UEs 200, common control channel information may need to be duplicated in each UE-specific BW. The base station 100 can choose between these options and accordingly, some UEs 200 may have a common part in their 1^{st} RF BW while others may have dedicated location and duplicate UE-common information. A physical control format indicator channel (PCFICH) type signaling may be used in these cases to support for backward compatibility.

RRM considerations for 1^{st} RF BW: For RRM measurements, when the UE 200 is using the 1^{st} RF BW, the following options exist: (i) RRM BW is inside the 1^{st} RF BW, (ii) RRM BW is separate from the 1^{st} RF BW, and (iii) new RS insides the 1^{st} RF BW for measurement purposes.

For option (i), the 1^{st} RF BW of UEs 200 overlaps with the RRM BW that is provided by the base station 100. For example, when the RRM BW spans the entire BW, then there are RRM signals present inside the UE's 200 1^{st} RF BW that enable RRM measurements. For these cases i.e., when the RRM BW spans the entire NW BW, no new configurations are needed from the NW side for configuring the 1^{st} RF BW for the RRM measurements. However, when the RRM BW is the same as the initial access BW (as mentioned earlier, when the SSS is used for RRM measurements, the RRM BW is same as initial access BW), then the base station 100 has to configure the 1^{st} RF BW for all UEs 200 to overlap with the RRM BW region which can limit the ability to flexibly configure the 1^{st} RF BW to the UEs 200.

For option (ii), the 1^{st} RF BW is separated from the RRM BW. This case occurs when the RRM BW is same as the initial access BW. In such a setting, the base station 100 can configure measurement gaps while accounting for a re-tuning delay necessary for the UE 200 to switch its RF from 1^{st} RF BW region to the RRM BW region. This can increase the burden on a side of the base station 100 and also increases the power consumption at the UE 200 due to this frequent re-tuning.

For option (iii), the re-tuning of the UE 200 is avoided but the base station 100 needs to provide new RS for the measurements (i.e., measurement RS) inside each 1^{st} RF BW region. This option increases the signaling overhead.

Considering the above options and associated tradeoffs, option (iii) seems least favorable considering the signaling overhead. Considering the fact that option (ii)-type configuration is already supported in the LTE (e.g., for enhanced machine type communication (eMTC), the base station 100 can decide to either support option (i) or option (ii).

While it is preferred that the neighbor cell RRM BW is same as the RRM BW of the serving cell, the UE 200 may need to re-tune during measurement gaps when this does not happen. For example, this may happen in cases of inter-frequency measurements. Depending on the input from the RAN for the re-tuning timelines, appropriate configurations for the 1^{st} and 2^{nd} RF BW can be designed.

2^{nd} RF BW: Most of the issues identified for the case of 1^{st} RF BW also remain valid for the case of the 2^{nd} RF BW. In addition, the size of the 2^{nd} RF BW can be UE specific and depend on a) the numerology used in a specific band, b) the fast Fourier transform (FFT) size that is supported by the UE 200 and c) the data requirements for the UE 200. Further, each bandwidth part is associated with the specific numerology (i.e., sub-carrier spacing, cyclic prefix (CP) type). The base station 100 can configure the single carrier operating the BW to the UE 200 based on an indication by the UE 200 of its capability regarding its hardware aspects, such as the supported FFT size or the RF BW. These issues are more prominent for the 2^{nd} RF BW as it is considered to be much wider than the 1^{st} RF BW and extra emphasis is necessary on the configuration of the 2^{nd} RF BW region.

Just like the case of 1^{st} RF BW, the measurement gaps need to account for the time durations needed for re-tuning (if needed, for example in inter-carrier/inter-frequency cases) when the UE 200 operates in the 2^{nd} RF BW.

In addition, the 2^{nd} RF BW need not be contiguous considering that it is very wide (e.g., each contiguous allocation may be on orders of 100 MHz which may be supported by a single RF chain and the overall allocation may be on orders of 1 GHz). Depending on the RF implementation and the RF capabilities of the UE 200 (and exchanged as part of the UE capability information), the UE 200 may be allotted non-contiguous allocations inside the very wide NW bandwidth. All allocations given to the UE in this manner together constitute the definition of the 2^{nd} RF BW. Different from LTE, the measurement gap settings in the NR should be based on the RRM BW configurations and the 1^{st}, 2^{nd} RF BW configurations even in the case of the intra-frequency measurements. Depending on the gap between the 1^{st} and 2^{nd} RF BW, the scheduling can account for the cross-slot scheduling. However, the cross-slot scheduling can be complex due to multiple hybrid automatic repeat request (HARQ) processes to be accounted for. The UE 200 can use a timer-based de-activation of the 2 ^{nd} RF bandwidth to avoid excessive power consumption. Else, an explicit and fast signaling based on DCI/ MAC-CE is preferred from the base station 100 to avoid the UE 200 from using a lot of power.

FIG. 3 illustrates a resource being managed in a wireless communication system based on a two-step frequency-domain assignment process according to an embodiment of the present disclosure.

Referring to FIG. 3. this signaling should be at min-slot/ symbol level. In an embodiment of the present disclosure, the active time period is indicated by the base station 100 using at least one of the explicit DCI signaling, an implicit DCI signaling, a MAC CE signaling, a time pattern, and a DRX signaling.

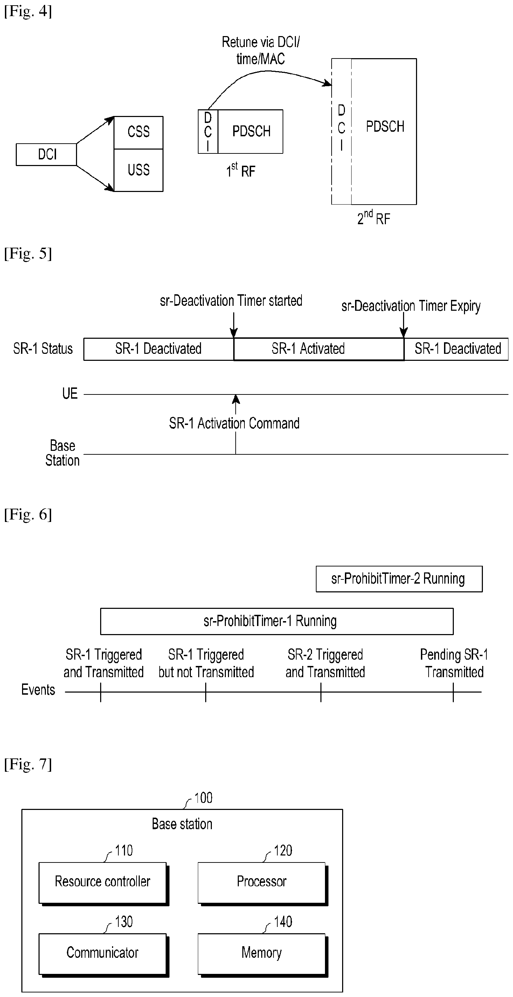

FIG. 4 illustrates a resource being managed in a wireless communication system based on a common search space procedure according to an embodiment of the present disclosure.

Referring to FIG. 4. Search Space Locations: Only when the RF BW's overlap across the user of the UEs 200 then the common search space (CSS) exists among the user of the UEs 200. Else the search spaces are dedicated search spaces (DSS) for each UE 200. However, as noted earlier, the CSS is necessary for monitoring the common system information. Hence, the number of blind decodes for the 1^{st} RF BW will remain to be 44 (assuming same as LTE). For similar reasons, the 2^{nd} RF BW also needs 44 blind decodes. Hence, for NR single carrier operations the blind decodes remain at 44.

The location of search spaces for the UE 200 can have the following options which depends on the UE 200 which RF bandwidth a) 1^{st} RF bandwidth b) 2^{nd} RF bandwidth and c) System bandwidth. It is beneficial that the UE's dedicated search spaces remain the same in 1^{st} and 2^{nd} RF BW in order to avoid any additional signaling. Such a design can help save UE power consumption as it does not have to search other spaces. But this is feasible only if there is an overlap between the 1^{st} and 2^{nd} RF BW's. But such an allocation can put some constraints on the scheduling of multiple UEs 200 by the base station 100. Hence maintaining the same DSS between 1^{st} and 2^{nd} RF BW may not be possible for the NR single carrier operations.

For the case of 2-stage DCI, part of the DCI can be in the 1^{st} RF and remaining parts can be in the 2^{nd} RF BW. The 1^{st} RF can link to the 2^{nd} RF BW's search space locations. In all these cases, common search space is preferred to be fixed to avoid any corner cases and failure scenarios. User specific space can always be configured either the exact search space location or the offsets form the previous locations. A linked-list type allocation is always possible where one PDCCH location can point to another one and so on. This can be used for accounting for limited bandwidth resources at various stages. Due to availability of wider bandwidth, in order to improve the decoding of the PDCCH, the base station 100 can use higher aggregation levels for the UE decoding in the UE search spaces.

Resource Allocation: When the UE specific BW is an order of magnitude higher than in the LTE i.e., >100 MHz, the resource allocation (RA) may have to be re-designed to reduce signaling overhead and the DCI sizes. In an example, Type-0/1 allocations in the LTE may be extended by considering the RBG size to proportionally scale to the BW. Type-2 RA is applicable for contiguous allocations and the NR may not be restricted to only support Type-2 RA for large BWs as this cannot achieve frequency diverse scheduling gains, may result to resource fragmentation, and throughput loss. For the case of Type-0/1 allocations and for a cell bandwidth of 100 RBs in LTE, the number of bits needed for the RA is 25. Even if the RBG sizes are scaled (as done in the LTE for increasing cell bandwidth sizes), the RA field will also increase while frequency selectivity will decrease. However, this can still be considered as one fall back option. The scaling can be proportional to the number of carriers that are merged into one single carrier.

An alternative mechanism is to define a "data resource set" similar to the control resource set agreed for the NR-PDCCH transmissions. The control resource set is a set of PRBs (need not be contiguous in frequency) within which the UE 200 attempts to blindly decode NR-PDCCH. Similarly, a data resource set can be defined as a set of PRBs which is allocated to the UE 200 with a given numerology. Multiple data resource sets can be allocated to the UE 200 depending on the UE capability. Although no clear motivation for overlapping data resource sets is seen now, the option may be allowed for future wireless technologies. Such overlapping resource sets can be used to avoid disruptions in the data receiving process when the resource allocation for UEs 200 may have to be changed by the base station 100. But this is however implementation aspects of the base station 100. Depending on the resource sets that are allotted to the UEs 200, it may happen that different numerologies may be optimal for different resource sets. In such cases, the multiple numerology aspects that are discussed in the disclosure also need to be accounted for. Depending on the size of the resource sets, the numerologies used and the like, the channel state information (CSI) reports may also be either independently configured per resource set or not. However, note that when such mechanisms are performed, the carrier aggregation (CA) type operations will be replicated. So overhead may increase. Accordingly, the configurations for the number of resource sets need to be identified by the gNB and user.

The resource sets may be termed as the primary resource set (i.e., bandwidth part) and the secondary resource set (i.e., RB within the at least one primary resource set). The primary resource set may control the secondary primary resource set as an on-off manner. A semi-static or dynamic allocations can be considered for controlling the secondary primary resource set. The semi-static allocations can be used only if massive amounts of data to be considered as the UE power consumption can be higher in these cases. Else, the dynamic allocation using the DCI is preferred. Furthermore, the DCI-based dynamic scheduling saves the power from the UE 200. The MAC-control element based signaling may also be used, but is slower compared to the DCI-based scheduling. The semi-static allocations can allow for some transition times as well which may be difficult in cases of dynamic transitions, so that the allocations can be provided based on the UE capability. For such use cases, the UE capability information can signal the UE ability to tune/re-tune its RF and exchange to the base station 100. When this is done, the eNB understands whether to use semi-static or dynamic signaling. The time scales for bandwidth adaptation are: Slot-level, mini-slot level, less than few symbols, fraction of CP. Slot-level adaptation can be supported with cross-slot scheduling. Within slot bandwidth adaptation with time gap for switching is proposed for small data / RB scenarios. Each of these allocations can be either UE specific or UE group specific. For group specific, gNB can use group_RNTI based indication to allot these for the users. Each of these bandwidth adaptation mechanisms depend on the UE capability. Sub-band based mechanisms may also be considered for allocation which will be closer to CA. In such cases, each sub-band may be allotted different modulation and coding scheme (MCS), HARQ, transport block (TB) and the like.

The RE mapping can be time-first or frequency first mapping. But time first mapping has several benefits from the UE beamforming perspective. It is preferred to have time-first mapping for the 5G users at least for localized transmissions. Since latency is usually not a big issue for the users which request for such bandwidth adaptation, distributed scheduling can also be used in order to achieve better frequency diverse scheduling.

The transport block sizes will increase in proportion to the bandwidth being considered for 2^{nd} RF BW. Large TB is good for channel coding. Since the TB may be very large, either code-block based HARQ or CB-group based HARQ may be supported for 5G and future wireless systems. However, as it is clear there is a tradeoff in increasing the HARQ feedback granularity and the performance.

Modulation Schemes, RS Design: Considering the frequency selectivity of such wide band width, without the presence of multiple RS across different parts of the BW, the performance of higher order modulations, such as 256-QAM on 1GHz order of 2^{nd} RF BW is questionable. While per-PRB DMRS designs are being considered for NR, the density inside each PRB may have to vary depending on the modulation being considered. Furthermore, considering the fact that multiple numerologies may be multiplexed within such wide bandwidth, the RS density may again be dependent on the number of data resource sets (data sub-bands) that can be formed within the wide BW.

In addition, some automatic gain control (AGC) settling allowing reference signals are needed in such cases. When the BW is changing between narrow and wide, the AGC must be settled properly in order to be able to properly receive the signals. This is because analog digital converter (ADC) inputs are changed dynamically. If the AGC is not accounted for, then saturation may result in the received signal and the whole purpose of BW adaptation is lost. The base station 100 and the UE 200 may agree to allow for the UE 200 to settle AGC during the re-tuning time. However note that the inter-band re-tuning time is large when compared to intra-band re-tuning time. In such cases, the AGC settling may be taken care of simultaneously. But intra-band re-tuning needs special care to account for the AGC settling. Therefore measurement gaps can account for the same. If measurement gaps are to be minimized, some new reference signal can be provided by the base station 100 to the UE 200, such as demodulation reference signal (DMRS), but in the first few symbols of the narrow/wide bands upon changing of the bandwidth. The UE 200 uses them to adjust the AGC parameters inside the hardware. Some heavy coding schemes may be used if the DMRS signals are not provided separately, but are there only with the data. Since if new signals are not presented, the AGC settling may corrupt the data reception at least in the first few symbols. So the base station 100 may indicate the UE 200 of higher DMRS density in first few symbols and then fall back to regular DMRS density.

Since the bandwidth is very large now, the pre-coding design can change. The sub-bands to be considered can be modified such that the overhead is not too much in the feedback. The sub-band can be scaled appropriately to the scenario, size of the bandwidth allotted to the UE 200, and the like. Else, if accurate scheduling is needed, the CSI feedback resources for the UE 200 to send to the base station 100 must be appropriately increased. A multi-step feedback approach can be used by the user of the UE 200 where it sends the feedback of the primary resource set and then the secondary resource set and so on. One SRS transmission may also not be sufficient in such cases. The SRS must be scheduled depending on the data resource sets scheduled for the user. The SRS-per data resource set is ideal. A power control can be appropriately handled. When multiple numerologies are used by the user, the power control can be split based on the size of data resource sets and the numerology used in each resource set.

When the wide bandwidth are used, a wide tracking signals may be beneficial for frequency tracking purposes. While for >6GHz systems, the beam specific reference signals are present in the whole bandwidth, for sub-6GHz systems if cell-specific reference signals (CRS), such as in LTE are not present, then new signals, such as TRS (tracking reference signals) will be need to be provided for the frequency tracking purposes for the user.

UL bandwidth adaptation: The UE 200 has sufficient time for obtaining uplink control information (UCI) and then performing UL data transmissions (assuming bandwidth does not change between consecutive UL transmissions, in which case partial slot transmissions may have to be considered to account for re-tuning, but this is FFS as the motivation is not clear). Current LTE mechanisms already support wideband SRS and narrowband SRS transmissions in the last symbol of the sub frame which is preceded by a PUSCH transmissions whose BW may be smaller than that of the wideband SRS (the timing and re-tuning is already accounted for and same mechanisms can be re-used for the NR). For the case of self-contained frame structures, a PUCCH and the PUSCH are time multiplexed and the BW of the PUCCH is smaller in comparison to that of the PUSCH. However, it can be handled by the base station 100 as to how much PUSCH BW may be supported while considering the re-tuning aspects and the UE ability.

However, depending on the PUCCH resources available, the PUCCH resources may have to be scheduled out of the band. This is equivalent to the UL bandwidth adaptation as the user of the UE 200 must now tune to new RF BW to decode the PUCCH resources. A combination of semi-static configuration and dynamic signaling can be used to determine the PUCCH resource both for the long and short PUCCH formats for 5G and future wireless systems. The format of the PUCCH also decides if really new bandwidth is needed for the PUCCH resources or not. Since the PUCCH resource are shared in a cell, the adaptation done can be either UE-specific or UE-group specific. Here, the group_RNTI may be sued by the base station 100 to signal a group of users for the UE-group specific signaling.

The power control can be adjusted based on the bandwidth that will be used by the UE 200 in the uplink across multiple sub-bands. The LTE power control equation has applied power control per RB and thus when more RBs are allocated, more transmission power is used. This aspect is reflected into *M*_{PUSCH,c} assuming 15 kHz SCS only. When different SCSs (e.g., 30 kHz and 60 kHz SCSs) are used, the power control in the equation should be modified. This can be done by adjusting the parameter *M*_{PUSCH,c} appropriately based on the size of the RB's in proportion to the 15 kHz subcarrier spacing as reference. Other solution is to use different open loop control parameters of *α_{c}* and *P*_{O_PUSCH,c}.

The same timing alignment can be assumed for all the UL allocations. Else it will be difficult for the user to send allocations in the uplink at different bandwidths using the different TA values. Else other mechanisms is to assume a maximum TA value and use it across all the allocations given to the UE 200.

The UL bandwidth adaptation granularity depends on the UE capability information and can be done on a slot/ mini-slot/less than a symbol/ fraction of a CP level. Depending on the requirement UE 200 may adapt.

Further, each bandwidth part guarantees a specific quality of service (QoS) to the UE 200 (e.g., the bandwidth part with small symbol duration ensures low latency, the bandwidth part with high bandwidth ensures a high data rate). In order to allow the base station 100 to schedule uplink grants using different bandwidth parts to the UE 200, the UE 200 is required to inform the base station 100 about the QoS requirements of the uplink data buffered in the UE 200. The UE 200 can indicate this information using scheduling request procedure. The UE 200 can be configured with multiple scheduling request resources, where the transmission in each scheduling request resource indicates a QoS value of the buffered uplink data to the base station 100. This can be obtained by mapping a logical channel to a scheduling request configuration, such that if data is available for the logical channel then the UE 200 triggers transmission of associated scheduling request. The base station 100 after receiving the scheduling request from the UE 200 can determine the logical channels for which uplink grant is required and can schedule the uplink grant in the optimal bandwidth part to the UE 200.

Scheduling Request Procedure: In an embodiment of the present disclosure, following procedure is used for scheduling request framework:
1) The UE 200, when initiating connection establishment with the base station 100, provides its capability related to support of multiple physical layer configurations or numerologies or bandwidths. In an example, the base station 100 can be indicated by number of Tx and Rx chains supported by the UE 200 and/or by number of different TTI which can be supported by UE's MAC concurrently. Based on the UE capability information, the base station 100 can configure the UE 200 with different physical layer configurations.
2) The radio resources for the scheduling request and parameters related to transmission for the scheduling request are configured by the base station 100 in the form of RRC configuration. The RRC configuration can include multiple scheduling request configurations for the UE 200.
3) If any of the scheduling request configuration requires explicit activation, then UE 200 cannot transmit scheduling request in the given configured radio resource until the given scheduling request configuration is activated by the base station 100. The base station 100 activates the scheduling request configuration by providing at least one of the RRC message, the MAC message and DCI message.
4)The triggering criteria for the scheduling request is defined by a buffer status reporting mechanism. The buffer status reporting mechanism provides decision on selection of the scheduling request configuration and can also provide information to be included in a scheduling request message.
5) Based on the parameters and the radio resources configured for the given scheduling request, the UE 200 decides on the timing of scheduling request transmission and radio resources to be used for the transmission.

Scheduling Request Configuration: In an embodiment of the present disclosure, the base station 100 can configure parameters for the scheduling request for the UE 200. Each configuration of the scheduling request is associated with a sr-ConfigIndex and an additional information referred to as sr-Info. The sr-Info can be one of the following:
Physical carrier,
Frequency band,
Physical cell,
Physical layer configuration or numerology,
TTI value,
Slot or mini-slot length,
HARQ process,
HARQ entity,
Buffer Status Report (BSR) entity,
sr-ConfigIndex: configuration identity of scheduling request,
Logical channel identity,
Logical Channel Group (LCG) identity, and
Any other information not precluded.

FIG. 5 illustrates multiple scheduling request resources being managed based on a timer according to an embodiment of the present disclosure.

Referring to FIG. 5. the base station 100 may either configure multiple radio resources for the scheduling request configurations associated to different sr-Info. In an embodiment of the present disclosure, the base station 100 may configure same radio resources for the scheduling request configurations associated to different sr-Info.

FIG. 6 illustrates multiple scheduling request resources being managed based on a priority according to an embodiment of the present disclosure.

Referring to FIG. 6, following parameters are provided for each scheduling request configuration:

### 1) Contained within the SchedulingRequestConfig

a. sr-ConfigIndex: To identify scheduling request configuration,
b. List of sr-InfoIndex: List of identities of the sr-Info which are associated with this scheduling request configuration,
c. sr-Activation: To indicate whether the scheduling request configuration requires activation or not. When it is set, it indicates that scheduling request configuration requires activation. Absence of the field implies that scheduling request configuration does not require activation,
d. sr-DeactivationTimer: Timer whose expiry results in deactivation of the scheduling request configuration. If the field is absent then no timer value is applied as shown in the FIG. 5,
e. sr-PUCCH-ResourceIndex: Physical layer resource location for the scheduling request transmission,
f. sr-Index: To determine subframe/slot/mini-slot where scheduling request can be transmitted,
g. sr-TransMax: Maximum number of scheduling request transmission count, and
h. sr-ProhibitTimer: Waiting timer value to control scheduling request transmission. Value of zero implies that no waiting timer is used as shown in the FIG. 6.

Scheduling Request Activation: If the MAC entity is configured with one or more scheduling request configurations, the base station 100 may activate and deactivate the configured scheduling requests. The scheduling request configurations where sr-Activation indicates that scheduling request does not require activation or scheduling request configurations where sr-Activation field is absent are always activated. The base station 100 activates and deactivates the scheduling request configurations by sending the Activation/Deactivation RRC or MAC control element or DCI message. Furthermore, the MAC entity maintains a sr-DeactivationTimer timer per scheduling request and deactivates the given scheduling request upon its expiry. The scheduling request configurations (which have sr-Activation as set) are initially deactivated upon addition and after a handover.

The MAC entity shall for each TTI and for each scheduling request configuration:
1)If the MAC entity receives an Activation/Deactivation message in the TTI activating the given scheduling request configuration (the activation message may contain either ConfigIndex or sr-ConfigIndex or sr-InfoIndex for scheduling request configuration identification), the MAC entity shall in the TTI:
   a. Activate the scheduling request configuration, and
   b. Start or restart the sr-DeactivationTimer associated with the given scheduling request configuration.
2) Else, if the MAC entity receives an Activation/Deactivation message in this TTI deactivating the scheduling request configuration; or
3) If the sr-DeactivationTimer associated with the given scheduling request configuration expires in this TTI:
   a. Deactivate the scheduling request configuration,
   b. Stop the sr-DeactivationTimer associated with the given scheduling request configuration.
4) f the SCell is deactivated:
   a) Not transmit any scheduling request according to the provided configuration.

Scheduling Request Trigger: The scheduling request for a given configuration shall be triggered by the buffer status reporting mechanism. Each logical channel is associated with one or multiple sr-Info value (e.g., logical channel identity). The buffer status reporting procedure shall initiate the scheduling request transmission procedure along with the indication of which configuration shall be used for the scheduling request transmission. The scheduling request configuration can be indicated via the sr-ConfigIndex of the scheduling request configuration. The buffer status reporting procedure can initiate scheduling request trigger based on the mapping between logical channels for which buffer is not empty and scheduling request configuration. If the buffer status reporting determines that the scheduling request trigger is required, then for each of the logical channels with non-zero buffer size whose buffer status reporting is required and if the PUSCH resources are not available.
1) Each logical channel configuration may include sr-ConfigIndex which maps the logical channel to the scheduling request configuration. The UE 200 shall determine that the scheduling request needs to be triggered for the scheduling request configuration whose sr-ConfigIndex matches the value included in the logical channel configuration of given logical channel.
2) If the logical channel configuration does not include any mapping information for the scheduling request configuration, then the UE 200 shall determine that the scheduling request needs to be triggered for the scheduling request configuration whose sr-Info points to the given logical channel. In an example, if the sr-Info is logical channel group, then the UE 200 triggers the scheduling request for the scheduling request configuration whose associated logical channel group is the same as the group index in the logical channel configuration of the given logical channel. The sr-InfoIndex value corresponding to the logical channel shall be used to trigger the scheduling request.

Scheduling Request Transmission: When the scheduling request is triggered, it shall be considered as pending until it is cancelled. All pending scheduling request(s) shall be cancelled and all sr-ProhibitTimer shall be stopped when a MAC PDU is assembled and the MAC PDU includes the buffer status report which contains buffer status of all logical channels up to (and including) the last event that triggered the buffer status report. If buffer status report does not contain the buffer report of all logical channels for which buffer status report is triggered, then scheduling request(s) shall be cancelled and sr-ProhibitTimer shall be stopped for the scheduling request configurations which are indicated by the buffer status reporting procedure.

The MAC entity shall maintain separate SR_COUNTER for each scheduling request configuration for which sr-TransMax is explicitly indicated

If the scheduling request is triggered for the given scheduling request configuration and there is no other scheduling request pending for the given configuration and the MAC entity maintains dedicated SR_COUNTER for the given configuration, the MAC entity shall set the corresponding SR_COUNTER to 0.

As long as one scheduling request is pending, the MAC entity shall for each TTI:
1) if no UL-SCH resources are available for the transmission in the TTI in the below conditions:
   a. If multiple scheduling requests are triggered with different scheduling request configurations and which do not share the radio resources for the scheduling request transmission, then the UE 200 selects all the given scheduling request configurations,
   b. If multiple scheduling requests are triggered with different scheduling request configurations and which share the same radio resources for scheduling request transmission, then
      i. the UE 200 selects the scheduling request configuration which has the highest priority indicated by sr-Priority among the triggered scheduling requests,
      ii. If there are multiple scheduling request configurations sharing the same highest sr-Priority value or if sr-Priority is not available for any of the scheduling request configurations for which scheduling request is triggered, then
         a) the UE 200 selects the scheduling request configuration based on the priority of sr-InfoIndex. For example, if sr-InfoIndex points to logical channel or logical channel group then UE 200 selects the scheduling request configuration which is associated with the higher priority logical channel or logical channel group, and
         b) If priority of sr-InfoIndex is not available or if there are multiple highest priority sr-InfoIndex for which scheduling request is triggered, then it is up to UE implementation to select the scheduling request configuration.
   c. For each of the selected scheduling request configurations:
      i. if the MAC entity has no valid PUCCH resource for the scheduling request configuration for which scheduling request is pending: initiate a Random Access procedure and cancel all pending scheduling request(s) for the given configuration.
      ii. else if the MAC entity has at least one valid PUCCH resource for scheduling request configuration for which scheduling request is pending and if this TTI is not part of a measurement gap for transmission and if sr-ProhibitTimer for the given scheduling request configuration is not running:
         a) if SR_COUNTER for the given scheduling request configuration is less than sr-TransMax:
            a-1) increment SR_COUNTER corresponding to the given scheduling request configuration by 1;
            a-2) instruct the physical layer to signal the scheduling request using following:
            a-2-1)Instruct physical layer to transmit the scheduling request (i.e., timing and frequency resource for scheduling request transmission) based on the value of sr-Index and sr-ResourceIndex if available.
            a-3) Start the sr-ProhibitTimer corresponding to the given scheduling request configuration.
         b) Else if SR_COUNTER for the selected scheduling request configuration(s) is greater than or equal to sr-TransMax:
            b-1) notify RRC to release PUCCH for all serving cells;
            b-2) clear any configured downlink assignments and uplink grants;
            b-3) initiate a Random Access procedure on the SpCell and cancel all pending SRs.

The procedures mentioned in this present disclosure are applicable for any technology and not restricted to 3GPP 5G technology.

FIG. 7 is a block diagram illustrating a base station according to an embodiment of the present disclosure.

Referring to FIG. 7, in an embodiment of the present disclosure, the base station 100 includes a resource controller 110, a processor 120, a communicator 130, and a memory 140. The resource controller 110 is coupled to the memory 140, the processor 120 and the communicator 130. In an embodiment of the present disclosure, the resource controller 110 is configured to allocate the resource for the data transmission for the UE 200 in the two-step frequency-domain assignment process as a) indicating one or more bandwidth part, and b) indicating at least one RB within the one or more bandwidth part.

In an embodiment of the present disclosure, the resource controller 110 is configured to allocate the resource for the data transmission from the UE 200 by indicating the active time period of at least one RB within the bandwidth part, so as to avoid the power consumption.

In an embodiment of the present disclosure, the resource controller 110 configures the bandwidth part including the search space indicating the location of at least one RB for the data transmission from the UE 200 and signal the bandwidth part to the UE 200.

In an embodiment of the present disclosure, the resource controller 110 is configured to monitor the UE common information (for RRC Connected UE's) in the common search space (CSS). Further, the resource controller 110 is configured to monitor the common per-beam information in above 6GHz systems in the UE search space (USS). Further, the resource controller 110 is configured to monitor the dedicated search spaces for UE specific configurations and get configurations for the 2^{nd} RF BW (if needed). The location of search spaces for the UE depends on the UE's 1^{st} RF bandwidth, 2^{nd} RF bandwidth and system bandwidth.

In an embodiment of the present disclosure, the configuration of the DL bandwidth part includes at least one CORESET. The CORESET contains the search space for the DCI. The maximum bandwidth for the CORESET for a RMSI scheduling and NR-PDSCH carrying RMSI should be equal to or smaller than a certain DL bandwidth of NR that all UE 200 can support in each frequency range, so that the UE 200 is only assumed to receive/transmit within the active DL/UL bandwidth part(s) using the associated numerology.

In an embodiment of the present disclosure, the resource controller 110 is configured to receive capability information to support at least one physical layer configuration from the UE 200. Further, the resource controller 110 configures the at least one physical layer configuration for the at least one scheduling request for the UE. Further, the resource controller 110 is configured to manage the at least one scheduling request for the resource in the wireless communication system 1000.

The processor 120 is configured to execute instructions stored in the memory 140 and to perform various processes. The communicator 130 is configured for communicating internally between internal hardware components and with external devices via one or more networks. The communicator 130 is configured for communicating with the resource controller 110 to manage the resource in the wireless communication system 1000.

The memory 140 also stores instructions to be executed by the processor 120. The memory 140 may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory 140 may, in some examples, be considered a non-transitory storage medium. The term "non-transitory" may indicate that the storage medium is not embodied in a carrier wave or a propagated signal. However, the term "non-transitory" should not be interpreted that the memory 140 is non-movable. In some examples, the memory 140 can be configured to store larger amounts of information than the memory. In certain examples, a non-transitory storage medium may store data that can, over time, change (e.g., in random access memory (RAM) or cache).

Referring to FIG. 7 shows various hardware components of the base station 100 but it is to be understood that other embodiments are not limited thereon. In other embodiments of the present disclosure, the base station 100 may include less or more number of components. Further, the labels or names of the components are used only for illustrative purpose and does not limit the scope of the present disclosure. One or more components can be combined together to perform same or substantially similar function to to manage the resource in the wireless communication system 1000.

FIG. 8 is a block diagram illustrating a UE according to an embodiment of the present disclosure.

Referring to FIG. 8, in an embodiment of the present disclosure, the UE 200 includes a resource controller 210, a processor 220, a communicator 230, and a memory 240. The resource controller 210 is coupled to the memory 240, the processor 220 and the communicator 230.

In an embodiment of the present disclosure, the resource controller 210 configures the resource for the data transmission in the two-step frequency-domain assignment process as a) configuring at least one bandwidth part indicated by the base station 100, and b) configuring at least one RB within the at least one bandwidth part indicated by the base station 100. The resource controller 210 performs the data transmission using the at least one RB within the at least one bandwidth part.

In an embodiment of the present disclosure, the resource controller 210 receives the active time period of at least one RB within the bandwidth part for the data transmission from the base station 100. Further, the resource controller 210 configures the resource for the data transmission based on the active time period of the at least one RB within the bandwidth part. Further, the resource controller 210 performs the data transmission using the at least one RB within the at least one bandwidth part.

In an embodiment of the present disclosure, the resource controller 210 is configured to receive the bandwidth part allocated by the base station 100. The bandwidth part includes the search space indicating the location of at least one RB for the data transmission. Further, the resource controller 210 is configured to identify the at least one RB within the search space. Further, the resource controller 210 is configured to perform the data transmission using the at least one RB within the at least one bandwidth part.

In an embodiment of the present disclosure, the resource controller 210 is configured to send capability information to support at least one physical layer configuration to the base station 100. Further, the resource controller 210 is configured to receive the at least one physical layer configuration for the at least one scheduling request from the base station 100. The resource controller 210 is configured to manage the at least one scheduling request for the resource in the wireless communication system 1000.

The processor 220 is configured to execute instructions stored in the memory 240 and to perform various processes. The communicator 230 is configured for communicating internally between internal hardware components and with external devices via one or more networks. The communicator 230 is configured for communicating with the resource controller 210 to manage the resource in the wireless communication system 1000.

The memory 240 also stores instructions to be executed by the processor 220. The memory 240 may include non-volatile storage elements. Examples of such non-volatile storage elements may include magnetic hard discs, optical discs, floppy discs, flash memories, or forms of EPROM or EEPROM memories. In addition, the memory 240 may, in some examples, be considered a non-transitory storage medium. The term "non-transitory" may indicate that the storage medium is not embodied in a carrier wave or a propagated signal. However, the term "non-transitory" should not be interpreted that the memory 240 is non-movable. In some examples, the memory 240 can be configured to store larger amounts of information than the memory. In certain examples, a non-transitory storage medium may store data that can, over time, change (e.g., in RAM or cache).

Referring to FIG. 8 shows various hardware components of the UE 200 but it is to be understood that other embodiments are not limited thereon. In other embodiments of the present disclosure, the UE 200 may include less or more number of components. Further, the labels or names of the components are used only for illustrative purpose and does not limit the scope of the present disclosure. One or more components can be combined together to perform same or substantially similar function to to manage the resource in the wireless communication system 1000.

FIG. 9 is a flow diagram illustrating various operations implemented on a base station for managing a resource in a wireless communication system based on a common search space procedure according to an embodiment of the present disclosure.

Referring to FIG. 9, the operations (i.e., S902 and S904) are performed by the resource controller 110. At S902, the method includes configuring bandwidth part including the search space indicating the location of at least one RB for the data transmission from the UE 200. At 904, the method includes signaling the bandwidth part to the UE 200.

The various actions, acts, blocks, operations, or the like in the flow diagram operation S900 may be performed in the order presented, in a different order or simultaneously. Further, in some embodiments of the present disclosure, some of the actions, acts, blocks, operations, or the like may be omitted, added, modified, skipped, or the like without departing from the scope of the present disclosure.

FIG. 10 is a flow diagram illustrating various operations implemented on a base station for managing one or more scheduling request for a resource in a wireless communication system according to an embodiment of the present disclosure.

Referring to FIG. 10, the operations (i.e., S1002 and S1006) are performed by the resource controller 110. At operation S1002, the method includes receiving capability information to support at least one physical layer configuration from the UE 200. At operation S1004, the method includes configuring the at least one physical layer configuration for the at least one scheduling request for the UE 200. At S1006, the method includes manging the at least one scheduling request for the resource in the wireless communication system 1000.

The various actions, acts, blocks, operations, or the like in the flow diagram S1000 may be performed in the order presented, in a different order or simultaneously. Further, in some embodiments of the present disclosure, some of the actions, acts, blocks, operations, or the like may be omitted, added, modified, skipped, or the like without departing from the scope of the present disclosure.

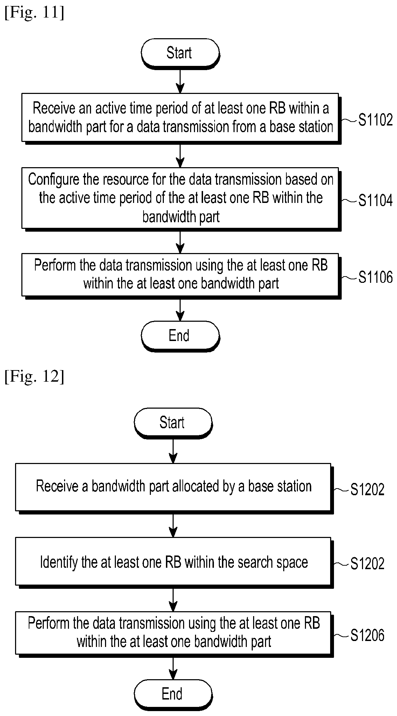

FIG. 11 is a flow diagram illustrating various operations implemented on a UE for managing a resource in a wireless communication system based on a timer according to an embodiment of the present disclosure.

Referring to FIG. 11, the operations (i.e., S1102 and S1106) are performed by the resource controller 210. At operation S1102, the method includes receiving the active time period of at least one RB within the bandwidth part for the data transmission from the base station 100. At operation S1104, the method includes configuring the resource for the data transmission based on the active time period of the at least one RB within the bandwidth part. At operation S1106, the method includes performing the data transmission using the at least one RB within the at least one bandwidth part.

The various actions, acts, blocks, operations, or the like in the flow diagram S1100 may be performed in the order presented, in a different order or simultaneously. Further, in some embodiments of the present disclosure, some of the actions, acts, blocks, operations, or the like may be omitted, added, modified, skipped, or the like without departing from the scope of the present disclosure.

FIG. 12 is a flow diagram illustrating various operations implemented on a UE for managing a resource in a wireless communication system based on a common search space procedure according to an embodiment of the present disclosure.

Referring to FIG. 12, the operations (i.e., S1202 and S1206) are performed by the resource controller 210. At operation S1202, the method includes receiving a bandwidth part allocated by the base station 100. At operation S1204, the method includes Identify the at least one RB within the search space. At operation S1206, the method includes performing the data transmission using the at least one RB within the at least one bandwidth part.

The various actions, acts, blocks, operations, or the like in the flow diagram S1200 may be performed in the order presented, in a different order or simultaneously. Further, in some embodiments of the present disclosure, some of the actions, acts, blocks, operations, or the like may be omitted, added, modified, skipped, or the like without departing from the scope of the present disclosure.

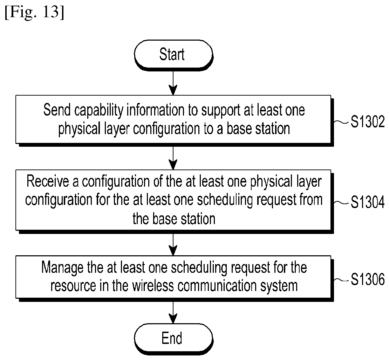

FIG. 13 is a flow diagram illustrating various operations implemented on a UE for managing one or more scheduling request for a resource in a wireless communication system according to an embodiment of the present disclosure.

Referring to FIG. 13, the operations (i.e., S1302 and S1306) are performed by the resource controller 210. At operation S1302, the method includes sending the capability information to support at least one physical layer configuration to the base station 100. At operation S1304, the method includes receiving the at least one physical layer configuration for the at least one scheduling request from the base station 100. At operation S1306, the method includes managing the at least one scheduling request for the resource in the wireless communication system 1000.

The various actions, acts, blocks, operations, or the like in the flow diagram S1300 may be performed in the order presented, in a different order or simultaneously. Further, in some embodiments of the present disclosure, some of the actions, acts, blocks, operations, or the like may be omitted, added, modified, skipped, or the like without departing from the scope of the present disclosure.

The embodiments disclosed herein can be implemented using at least one software program running on at least one hardware device and performing network management functions to control the elements.

While the present disclosure has been shown and described with reference to various embodiments thereof, it is to be understood by those skilled in the art that various changes in form and details may be made therein as defined by the appended claims.

## Claims

1. A method for managing a resource in a wireless communication system, the method comprising:
allocating, by a base station (100), the resource for a data transmission based on a two-step frequency-domain assignment process, wherein the two-step frequency-domain assignment process comprises indicating, to a User Equipment, UE, (200) at least one bandwidth part, and indicating, to the UE (200), at least one resource block, RB, within the at least one bandwidth part to allocate the resource to the UE (200), for the data transmission,
wherein a downlink bandwidth part from among the at least one bandwidth part includes at least one Control Resource Set, CORESET, and the at least one CORESET includes a search space for a downlink control information, DCI, and
wherein the method is **characterized in that** a maximum bandwidth for a CORESET for a remaining minimum system information, RMSI, scheduling and new radio-physical downlink shared channel, NR-PDSCH, carrying the RMSI from among the at least one CORESET is equal to or smaller than a certain downlink bandwidth of NR that all the UE (200) can support in each frequency range.

2. The method of claim 1, wherein the UE (200) is not capable of supporting a carrier bandwidth.

3. The method of claim 1, wherein the UE is configured to operate multiple bandwidth parts simultaneously, each bandwidth part being associated with a specific numerology, and wherein the multiple bandwidth parts are overlapped with each other.

4. The method of claim 1, wherein at least one RB of the at least one bandwidth part is activated or deactivated based on an active time period indicated using at least one of a time pattern, MAC Control Element, CE, or DCI.

5. The method of claim 1, further comprises:
providing, by the base station (100), at least one scheduling request configuration; and
receiving, by the base station (100), a scheduling request from the UE (200).

6. The method of claim 5, wherein the at least one scheduling request configuration is mapped with at least one logical channel.

7. A method for managing a resource by a user equipment, UE, (200) in a wireless communication system, the method comprising:
identifying, by the UE, (200) the resource for a data transmission based on a two-step frequency-domain assignment process, wherein the two-step frequency-domain assignment process comprises configuring at least one bandwidth part indicated by a base station (100), and configuring at least one resource block, RB, within the at least one bandwidth part indicated by the base station (100); and
performing the data transmission with the base station (100) using the at least one RB,
wherein a downlink bandwidth part from among the at least one bandwidth part includes at least one control resource set, CORESET, and the at least one CORESET includes a search space for a downlink control information, DCI, and
wherein the method is **characterized in that** a maximum bandwidth for a CORESET for a remaining minimum system information, RMSI, scheduling and new radio-physical downlink shared channel, NR-PDSCH, carrying the RMSI from among the at least one CORESET is equal to or smaller than a certain downlink bandwidth of NR that all the UE can support in each frequency range.

8. A base station (100) for managing a resource in a wireless communication system, the base station comprising:
a transceiver; and
at least one processor coupled with the transceiver and configured to:
allocate the resource for a data transmission based on a two-step frequency-domain assignment process,
wherein the two-step frequency-domain assignment process, performed by the at least one processor, comprises:
indicating, to the UE (200), at least one bandwidth part, and
indicating, to the UE (200), at least one resource block, RB, within the at least one bandwidth part to allocate the resource for the data transmission,
wherein a downlink bandwidth part from among the at least one bandwidth part includes at least one control resource set, CORESET, and the at least one CORESET includes a search space for a downlink control information, DCI, and
**characterized in that**
a maximum bandwidth for a CORESET for a remaining minimum system information, RMSI, scheduling and new radio-physical downlink shared channel, NR-PDSCH, carrying the RMSI from among the at least one CORESET is equal to or smaller than a certain downlink bandwidth of NR that all the UE can support in each frequency range.

9. The base station (100) of claim 8, wherein the UE (200) is not capable of supporting a carrier bandwidth.

10. The base station (100) of claim 8, wherein at least one RB of the at least one bandwidth part is activated or deactivated based on an active time period indicated using at least one of a time pattern, MAC Control Element, CE, or DCI.

11. A user equipment, UE, (200) for managing a resource in a wireless communication system, the UE (200) comprising:
a transceiver;
at least one processor coupled with the transceiver and configured to:
identify the resource for a data transmission based on a two-step frequency-domain assignment process; and
perform the data transmission with a base station (100) using at least one resource block, RB,
wherein the two-step frequency-domain assignment process, performed by the at least one processor, comprises configuring at least one bandwidth part indicated by the base station (100), and configuring the at least one RB within the at least one bandwidth part indicated by the base station (100),
wherein a downlink bandwidth part from among the at least one bandwidth part includes at least one control resource set, CORESET, and the at least one CORESET includes a search space for a downlink control information, DCI, and
**characterized in that**
a maximum bandwidth for a CORESET for a remaining minimum system information, RMSI, scheduling and new radio-physical downlink shared channel, NR-PDSCH, carrying the RMSI from among the at least one CORESET is equal to or smaller than a certain downlink bandwidth of NR that all the UE can support in each frequency range.

## Patentansprüche

1. Verfahren zum Verwalten einer Ressource in einem drahtlosen Kommunikationssystem, wobei das Verfahren Folgendes umfasst:
Zuweisen der Ressource für eine Datenübertragung durch eine Basisstation (100) basierend auf einem zweistufigen Frequenzbereichszuweisungsverfahren, wobei das zweistufige Frequenzbereichszuweisungsverfahren das Anzeigen mindestens eines Bandbreitenteils an ein Benutzergerät, UE, (200) und das Anzeigen mindestens eines Ressourcenblocks, RB, innerhalb des mindestens einen Bandbreitenteils an das UE (200) umfasst, um die Ressource dem UE (200) für die Datenübertragung zuzuweisen,
wobei ein Downlink-Bandbreitenteil aus dem mindestens einen Bandbreitenteil mindestens einen Steuerungsressourcensatz, CORESET, enthält und der mindestens eine CORESET einen Suchraum für Downlink-Steuerungsinformationen, DCI, enthält, und
wobei das Verfahren **dadurch gekennzeichnet ist, dass**
eine maximale Bandbreite für einen CORESET für eine RMSI(verbleibende Mindestsysteminformationen)-Planung und einen NR-PDSCH, neuer gemeinsam genutzter funkphysikalischer Downlink-Kanal, der die RMSI aus dem mindestens einen CORESET trägt, gleich oder kleiner als eine gewisse Downlink-Bandbreite von NR ist, die alle UE (200) in jedem Frequenzbereich unterstützen können.

2. Verfahren nach Anspruch 1, wobei das UE (200) nicht fähig ist, eine Trägerbandbreite zu unterstützen.

3. Verfahren nach Anspruch 1, wobei das UE so konfiguriert ist, dass es mehrere Bandbreitenteile gleichzeitig betreibt, wobei jeder Bandbreitenteil mit einer spezifischen Numerologie assoziiert ist und wobei die mehreren Bandbreitenteile einander überlappen.

4. Verfahren nach Anspruch 1, wobei mindestens ein RB des mindestens einen Bandbreitenteils basierend auf einer aktiven Zeitperiode aktiviert oder deaktiviert wird, die unter Verwendung eines Zeitmusters, eines MAC-Steuerungselements, CE, und/oder DCI angezeigt wird.

5. Verfahren nach Anspruch 1, das ferner Folgendes umfasst:
Bereitstellen mindestens einer Planungsanforderungskonfiguration durch die Basisstation (100); und
Empfangen einer Planungsanforderung von dem UE (200) durch die Basisstation (100).

6. Verfahren nach Anspruch 5, wobei die mindestens eine Planungsanforderungskonfiguration mindestens einem logischen Kanal zugeordnet ist.

7. Verfahren zum Verwalten einer Ressource durch ein Benutzergerät, UE, (200) in einem drahtlosen Kommunikationssystem, wobei das Verfahren Folgendes umfasst:
Identifizieren der Ressource für eine Datenübertragung durch das UE, (200) basierend auf einem zweistufigen Frequenzbereichszuweisungsverfahren, wobei das zweistufige Frequenzbereichszuweisungsverfahren das Konfigurieren mindestens eines von einer Basisstation (100) angezeigten Bandbreitenteils und das Konfigurieren mindestens eines Ressourcenblocks, RB, innerhalb des mindestens einen von der Basisstation (100) angezeigten Bandbreitenteils umfasst; und
Ausführen der Datenübertragung mit der Basisstation (100) unter Verwendung des mindestens einen RB,
wobei ein Downlink-Bandbreitenteil aus dem mindestens einen Bandbreitenteil mindestens einen Steuerungsressourcensatz, CORESET, enthält und der mindestens eine CORESET einen Suchraum für Downlink-Steuerungsinformationen, DCI, enthält, und
wobei das Verfahren **dadurch gekennzeichnet ist, dass**
eine maximale Bandbreite für einen CORESET für eine RMSI(verbleibende Mindestsysteminformationen)-Planung und einen NR-PDSCH, neuer gemeinsam genutzter funkphysikalischer Downlink-Kanal, der die RMSI aus dem mindestens einen CORESET trägt, gleich oder kleiner als eine gewisse Downlink-Bandbreite von NR ist, die alle UE in jedem Frequenzbereich unterstützen können.

8. Basisstation (100) zum Verwalten einer Ressource in einem drahtlosen Kommunikationssystem, wobei die Basisstation Folgendes umfasst:
einen Transceiver; und
mindestens einen Prozessor, der mit dem Transceiver gekoppelt und zu Folgendem konfiguriert ist:
Zuweisen der Ressource für eine Datenübertragung basierend auf einem zweistufigen Frequenzbereichszuweisungsverfahren,
wobei das von dem mindestens einen Prozessor ausgeführte zweistufige Frequenzbereichszuweisungsverfahren Folgendes umfasst:
Anzeigen mindestens eines Bandbreitenteils an das UE (200), und
Anzeigen mindestens eines Ressourcenblocks, RB, innerhalb des mindestens einen Bandbreitenteils an das UE (200), um die Ressource für die Datenübertragung zuzuweisen,
wobei ein Downlink-Bandbreitenteil aus dem mindestens einen Bandbreitenteil mindestens einen Steuerungsressourcensatz, CORESET, enthält und der mindestens eine CORESET einen Suchraum für Downlink-Steuerungsinformationen, DCI, enthält, und
**gekennzeichnet dadurch, dass**
eine maximale Bandbreite für einen CORESET für eine RMSI(verbleibende Mindestsysteminformationen)-Planung und einen NR-PDSCH, neuer gemeinsam genutzter funkphysikalischer Downlink-Kanal, der die RMSI aus dem mindestens einen CORESET trägt, gleich oder kleiner als eine gewisse Downlink-Bandbreite von NR ist, die alle UE in jedem Frequenzbereich unterstützen können.

9. Basisstation (100) nach Anspruch 8, wobei das UE (200) nicht fähig ist, eine Trägerbandbreite zu unterstützen.

10. Basisstation (100) nach Anspruch 8, wobei mindestens ein RB des mindestens einen Bandbreitenteils basierend auf einer aktiven Zeitperiode aktiviert oder deaktiviert wird, die unter Verwendung eines Zeitmusters, eines MAC-Steuerungselements, CE, und/oder DCI angezeigt wird.

11. Benutzergerät, UE, (200) zum Verwalten einer Ressource in einem drahtlosen Kommunikationssystem, wobei das UE (200) Folgendes umfasst:
einen Transceiver;
mindestens einen Prozessor, der mit dem Transceiver gekoppelt und zu Folgendem konfiguriert ist:
Identifizieren der Ressource für eine Datenübertragung basierend auf einem zweistufigen Frequenzbereichszuweisungsverfahren; und
Ausführen der Datenübertragung mit einer Basisstation (100) unter Verwendung mindestens eines Ressourcenblocks, RB,
wobei das von dem mindestens einen Prozessor ausgeführte zweistufige Frequenzbereichszuweisungsverfahren das Konfigurieren mindestens eines von der Basisstation (100) angezeigten Bandbreitenteils und das Konfigurieren des mindestens einen RB innerhalb des mindestens einen von der Basisstation (100) angezeigten Bandbreitenteils umfasst,
wobei ein Downlink-Bandbreitenteil aus dem mindestens einen Bandbreitenteil mindestens einen Steuerungsressourcensatz, CORESET, enthält und der mindestens eine CORESET einen Suchraum für Downlink-Steuerungsinformationen, DCI, enthält, und
**gekennzeichnet dadurch, dass**
eine maximale Bandbreite für einen CORESET für eine RMSI(verbleibende Mindestsysteminformationen)-Planung und einen NR-PDSCH, neuer gemeinsam genutzter funkphysikalischer Downlink-Kanal, der die RMSI aus dem mindestens einen CORESET trägt, gleich oder kleiner als eine gewisse Downlink-Bandbreite von NR ist, die alle UE in jedem Frequenzbereich unterstützen können.

## Revendications

1. Procédé de gestion d'une ressource dans un système de communication sans fil, le procédé comprenant :
allouer, par une station de base (100), la ressource pour une transmission de données sur la base d'un processus d'attribution de domaine de fréquence à deux étapes, où le processus d'attribution de domaine de fréquence à deux étapes comprend l'indication, à un Équipement Utilisateur, UE, (200), d'au moins une partie de bande passante, et l'indication, à l'UE (200), d'au moins un bloc de ressources, RB, dans l'au moins une partie de bande passante pour allouer la ressource à l'UE (200), pour la transmission de données,
où une partie de bande passante de liaison descendante parmi l'au moins une partie de bande passante inclut au moins un Ensemble de Ressources de Contrôle, CORESET, et l'au moins un CORESET inclut un espace de recherche pour des informations de commande de liaison descendante, DCI, et
où le procédé est **caractérisé en ce que**
une bande passante maximale pour un CORESET pour une planification d'informations de système minimum restant, RMSI, et un canal physique partagé de liaison descendante de nouvelle radio, NR-PDSCH, transportant les RMSI parmi l'au moins un CORESET est égale ou inférieure à une certaine bande passante de liaison descendante de NR que tous les UE (200) peuvent prendre en charge dans chaque plage de fréquences.

2. Procédé selon la revendication 1, où l'UE (200) n'est pas capable de prendre en charge une bande passante de porteuse.

3. Procédé selon la revendication 1, où l'UE est configuré pour exploiter simultanément de multiples parties de bande passante, chaque partie de bande passante étant associée à une numérologie spécifique, et où les multiples parties de bande passante se chevauchent les unes les autres.

4. Procédé selon la revendication 1, où au moins un RB de l'au moins une partie de bande passante est activé ou désactivé sur la base d'une période de temps active indiquée en utilisant au moins un parmi un modèle de temps, un Élément de Commande, CE, de MAC, ou des DCI.

5. Procédé selon la revendication 1, comprenant en outre :
fournir, par la station de base (100), au moins une configuration de demande de planification ; et
recevoir, par la station de base (100), une demande de planification de la part de l'UE (200).

6. Procédé selon la revendication 5, où l'au moins une configuration de demande de planification est mappée avec au moins un canal logique.

7. Procédé de gestion d'une ressource par un équipement utilisateur, UE, (200) dans un système de communication sans fil, le procédé comprenant :
identifier, par l'UE (200), la ressource pour une transmission de données sur la base d'un processus d'attribution de domaine de fréquence à deux étapes, où le processus d'attribution de domaine de fréquence à deux étapes comprend la configuration d'au moins une partie de bande passante indiquée par une station de base (100), et la configuration d'au moins un bloc de ressources, RB, dans l'au moins une partie de bande passante indiquée par la station de base (100) ; et
effectuer la transmission de données avec la station de base (100) en utilisant l'au moins un RB,
où une partie de bande passante de liaison descendante parmi l'au moins une partie de bande passante inclut au moins un ensemble de ressources de contrôle, CORESET, et l'au moins un CORESET inclut un espace de recherche pour des informations de commande de liaison descendante, DCI, et
où le procédé est **caractérisé en ce que**
une bande passante maximale pour un CORESET pour une planification d'informations de système minimum restant, RMSI, et un canal physique partagé de liaison descendante de nouvelle radio, NR-PDSCH, transportant les RMSI parmi l'au moins un CORESET est égale ou inférieure à une certaine bande passante de liaison descendante de NR que tous les UE peuvent prendre en charge dans chaque plage de fréquences.

8. Station de base (100) pour la gestion d'une ressource dans un système de communication sans fil, la station de base comprenant :
un émetteur-récepteur ; et
au moins un processeur couplé à l'émetteur-récepteur et configuré pour :
allouer la ressource pour une transmission de données sur la base d'un processus d'attribution de domaine de fréquence à deux étapes,
où le processus d'attribution de domaine de fréquence à deux étapes, effectué par l'au moins un processeur, comprend :
indiquer, à l'UE (200), au moins une partie de bande passante, et
indiquer, à l'UE (200), au moins un bloc de ressources, RB, dans l'au moins une partie de bande passante pour allouer la ressource pour la transmission de données,
où une partie de bande passante de liaison descendante parmi l'au moins une partie de bande passante inclut au moins un ensemble de ressources de contrôle, CORESET, et l'au moins un CORESET inclut un espace de recherche pour des informations de commande de liaison descendante, DCI, et
**caractérisée en ce que**
une bande passante maximale pour un CORESET pour une planification d'informations de système minimum restant, RMSI, et un canal physique partagé de liaison descendante de nouvelle radio, NR-PDSCH, transportant les RMSI parmi l'au moins un CORESET est égale ou inférieure à une certaine bande passante de liaison descendante de NR que tous les UE peuvent prendre en charge dans chaque plage de fréquences.

9. Station de base (100) selon la revendication 8, où l'UE (200) n'est pas capable de prendre en charge une bande passante porteuse.

10. Station de base (100) selon la revendication 8, où au moins un RB de l'au moins une partie de bande passante est activé ou désactivé sur la base d'une période de temps active indiquée en utilisant au moins un parmi un modèle de temps, un élément de commande, CE, de MAC, ou des DCI.

11. Équipement utilisateur, UE, (200) pour la gestion d'une ressource dans un système de communication sans fil, l'UE (200) comprenant :
un émetteur-récepteur ;
au moins un processeur couplé à l'émetteur-récepteur et configuré pour :
identifier la ressource pour une transmission de données sur la base d'un processus d'attribution de domaine de fréquence à deux étapes ; et
effectuer la transmission de données avec une station de base (100) en utilisant au moins un bloc de ressources, RB,
où le processus d'attribution de domaine de fréquence à deux étapes, effectué par l'au moins un processeur, comprend la configuration d'au moins une partie de bande passante indiquée par la station de base (100), et la configuration de l'au moins un RB dans l'au moins une partie de bande passante indiquée par la station de base (100),
où une partie de bande passante de liaison descendante parmi l'au moins une partie de bande passante inclut au moins un ensemble de ressources de contrôle, CORESET, et l'au moins un CORESET inclut un espace de recherche pour des informations de commande de liaison descendante, DCI, et
**caractérisé en ce que**
une bande passante maximale pour un CORESET pour une planification d'informations de système minimum restant, RMSI, et un canal physique partagé de liaison descendante de nouvelle radio, NR-PDSCH, transportant les RMSI parmi l'au moins un CORESET est égale ou inférieure à une certaine bande passante de liaison descendante de NR que tous les UE peuvent prendre en charge dans chaque plage de fréquences.
